# EUROPEAN PATENT SPECIFICATION

(11) **EP 4 714 315 B1**
(45) Date of publication and mention of the grant of the patent: **18.11.2026**
(21) Application number: 25203709.8
(22) Date of filing: 22.09.2025
(51) Int. Cl.: A47J 31/46, A47J 31/56

(54) **BEVERAGE MACHINE**
GETRÄNKEAUTOMAT
MACHINE À BOISSONS

(30) Priority: 23.09.2024 CN 202411324118
(43) Date of publication of application: 25.03.2026
(73) Proprietor: Kalerm Technology (Suzhou) Co., Ltd, Suzhou Jiangsu 215134 (CN)
(72) Inventor: DUAN, Yafei, Suzhou, Jiangsu, 215134 (CN); XIN, Dongliang, Suzhou, Jiangsu, 215134 (CN); FAN, Yanan, Suzhou, Jiangsu, 215134 (CN)
(74) Representative: Winter, Brandl - Partnerschaft mbB

(56) References cited:
- CN-A- 111 820 750
- CN-A- 115 005 671
- US-B2- 10 238 233

## Description

### TECHNICAL FIELD

The present application relates to the field of beverage preparation technology, and particularly relates to a beverage machine.

### BACKGROUND

Beverage machines are becoming increasingly popular in preparing beverages such as milk tea, coffee and/or tea drinks, not only being essential in business office settings and beverage shops but also gradually becoming a common household appliance.

Currently, water supply modes for beverage machines include built-in water tanks mode, use of water distribution networks (tap water) mode, or use of barreled water mode. Different water supply modes are suitable for different application scenarios of beverage machines, each having its own advantages and disadvantages. At present, the water supply mode of a beverage machine is pre-configured to one type before leaving the factory, and there is no beverage machine that integrates the advantages of all three water supply modes. If the application scenario of a user's purchased beverage machine changes, the optimal water supply mode user experience cannot be obtained anymore. Document CN111820750A discloses a dual-inlet water dispenser, which provides drinking water for the water tank by setting up independently-operable pipeline water inlet components and independent water inlet components.

### SUMMARY

The object of the present application is to provide a beverage machine that can adapt to multiple application scenarios and obtain optimal water supply user experience in each application scenario.

The present application provides a beverage machine, the various aspects and advantages of the present application will be elaborated in the following description, or will be apparent from the description, or can be understood through implementation of the present application.

An aspect of the present application provides a beverage machine, comprising:
a main body having a main body water inlet;
a water tank detachably connected to the main body, wherein the water tank has a water inlet and a water outlet, and the water outlet communicates with the main body water inlet;
wherein the water inlet is configured to be selectively set to any one of a closed state, a first state, or a second state; when the water inlet is in the closed state, a water source of the main body comes from the water tank; when the water inlet is in the first state, the water inlet communicates with a first water supply pipeline, and the water source of the main body comes from a water distribution network connected to the first water supply pipeline; when the water inlet is in the second state, the water inlet communicates with a second water supply pipeline, and the water source of the main body comes from a barreled water source connected to the second water supply pipeline; wherein an on-off valve is provided on the first water supply pipeline, and the on-off valve is configured to control connection or disconnection of a water passage from the water distribution network to the water inlet; a first water pump is provided on the second water supply pipeline, and the first water pump is configured to drive water flow from the barreled water source to the water inlet;
a first liquid level sensor configured to detect a liquid level height in the water tank; and
a controller communicatively connected to the first liquid level sensor; as the liquid level height is lower than a first liquid level height: when the water inlet is in the first state, the controller controls the on-off valve to open to replenish water to the water tank through the first water supply pipeline; when the water inlet is in the second state, the controller controls the first water pump to open to replenish water to the water tank through the second water supply pipeline; when the water inlet is in the closed state, the controller generates a signal for reminding a user to replenish water to the water tank.

Compared with the prior art, the beneficial effects of the present application are: the water tank can be replenished with water through a tap water pipeline, barreled water source, or by directly detaching the water tank, and users can select any of these three water replenishment modes according to usage scenarios, which greatly improves the scenario universality of the beverage machine, and optimal water supply user experience can be obtained in each application scenario; all three water replenishment modes first replenish water to the water tank, and then provide water to the main body for beverage preparation or output through the water outlet of the water tank, the water pressure of water flowing out through the water outlet of the water tank has no fluctuation, which can simplify the cup volume control algorithm of the controller and is beneficial for cup volume stability.

### BRIEF DESCRIPTION OF THE DRAWINGS

Fig. 1 is a schematic view of a beverage machine according to an embodiment of the present application.
Fig. 2 is a schematic view of the water tank detached from the beverage machine in Fig. 1.
Fig. 3 is a schematic view of the water tank connected to the main body of the beverage machine in Fig. 1.
Fig. 4 is a system block diagram of the beverage machine in Fig. 1.
Fig. 5 is a sectional view of the water tank of the beverage machine in Fig. 3.
Fig. 6 is an enlarged schematic view of the dashed box portion of the water tank in Fig. 5.
Fig. 7 is a sectional view showing the water inlet of one structure of the water tank of the beverage machine in Fig. 1.
Fig. 8 is a sectional view showing the water outlet of the water tank in Fig. 7.
Fig. 9 is an exploded perspective view of the water inlet seat of the beverage machine in Fig. 5.
Fig. 10 is a schematic view of the main part of the water inlet seat in Fig. 9.
Fig. 11 is a sectional view of the buffer seat of the beverage machine in Fig. 5.
Fig. 12 is a sectional view of another structure of the water tank of the beverage machine in Fig. 3.
Fig. 13 is a sectional view of yet another structure of the water tank of the beverage machine in Fig. 3.
Fig. 14 is a sectional view of still another structure of the water tank of the beverage machine in Fig. 3.

The repeated use of reference signs in this specification and drawings is intended to represent the same or similar features or elements of the present application.

### DETAILED DESCRIPTION

The following detailed description of the present application will be made with reference to the specific embodiments shown in the drawings. However, these embodiments do not limit the present application, and any structural, methodological, or functional variations made by those skilled in the art based on these embodiments are included within the scope of protection of the present application.

It should be understood that spatial relative position terms such as "upper", "above", "lower", "below" used in this document are for the purpose of convenient description to describe the relationship between one unit or feature and another unit or feature as shown in the drawings. The spatial relative position terms are intended to encompass different orientations of the device in use or operation besides the orientations shown in the Figs.

As used herein, the terms "first", "second", and "third" may be used interchangeably to distinguish one component from another, and these terms are not intended to indicate the position or importance of the respective components. The terms "upstream" and "downstream" refer to relative directions with respect to fluid flow in a fluid passage. For example, "upstream" refers to the direction from which fluid flows, while "downstream" refers to the direction toward which fluid flows.

The water supply mode with a built-in water tank is generally suitable for application scenarios with low continuous cup output requirements, such as household use, offices, hotels, small convenience stores, or small beverage shops. The total capacity of the water tank varies adaptively according to different specific application scenarios. The water amount in the tank can be directly added by users, which is cost-effective and convenient. However, in situations where the beverage machine needs to continuously prepare beverages, the water in the tank is consumed rapidly, requiring frequent water replenishment. Sometimes users cannot keep up with the replenishment, making water tank refilling inconvenient and reducing work efficiency. Moreover, users need to constantly monitor the water level in the beverage machine's tank, resulting in poor user experience.

The water supply mode using barreled water source is generally suitable for application scenarios with higher foot traffic, such as offices, hotels, convenience stores, or beverage shops. The water capacity of the barreled water source is much larger than the total capacity of the water tank, which can effectively reduce the frequency of water replenishment operations. However, barreled water source not only needs to be pre-ordered but also requires heavy physical transportation, and users still need to monitor the remaining amount of barreled water.

The water supply mode using a water distribution network (tap water) is generally suitable for application scenarios such as households with water purification systems, high-traffic offices, hotels, convenience stores, or beverage shops. The water distribution network (tap water) supply mode can solve the problem of frequent water replenishment operations. However, water pressure in the distribution network varies due to different standards in different countries, and water pressure in the same country's distribution network also fluctuates due to environmental/geographical factors. Currently, to ensure stable water pressure inside the beverage machine and stable cup volume output, beverage machines with water distribution network supply mode have complex pressure stabilization control algorithms to cope with water pressure fluctuations in the distribution network. When the same model of beverage machine needs to be sold to different countries, the development personnel of manufacturer need to adjust the pressure stabilization algorithm according to the water pressure of different countries' distribution networks. The development cost of the water distribution network (tap water) supply mode is relatively high.

Currently, the commercial sales model for beverage machines is that users customize or select beverage machines with optimal water inlet modes matching their application scenarios from manufacturers. In practice, situations where the application scenario of a beverage machine changes may occur. For example, when a convenience store owner initially purchases a beverage machine, based on foot traffic, they may choose a machine with a built-in water tank. As the commercial development of the convenience store's location progresses or a certain beverage becomes extremely popular, the water supply from the built-in water tank can no longer provide the optimal water replenishment experience. Based on current beverage machines, the convenience store owner either needs to purchase another beverage machine with a water distribution network (tap water) or barreled water source supply mode, or accept reduced efficiency and affected beverage sales due to water replenishment issues.

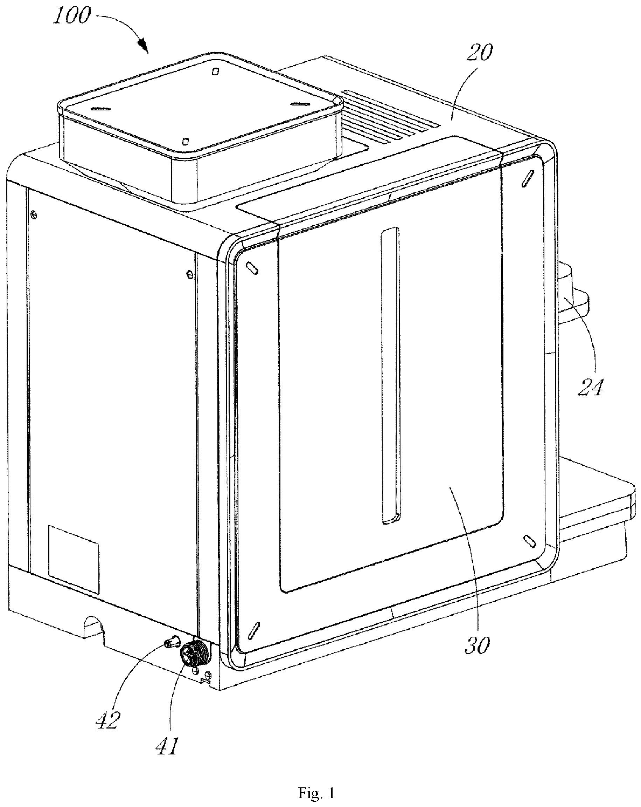

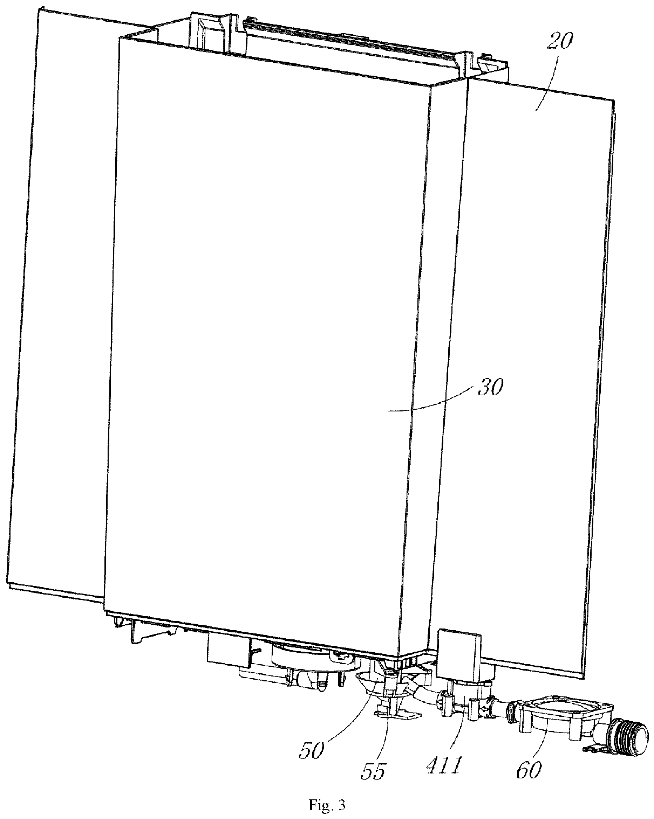

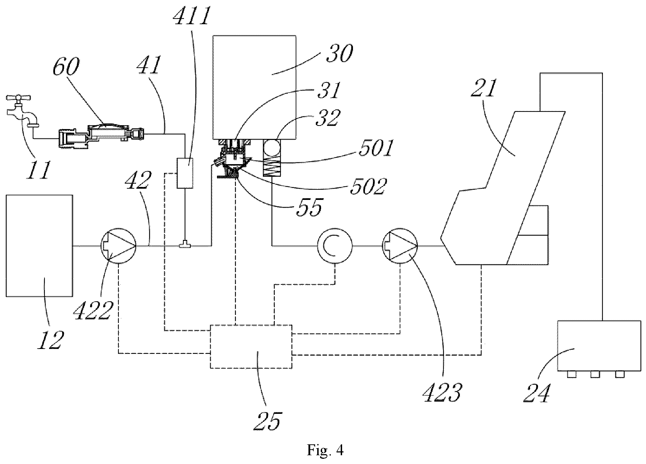

In a specific embodiment of the present application, referring to Figs. 1 to 5, the beverage machine 100 includes a main body 20 and a water tank 30. The water tank 30 is detachably connected to the main body 20, and the water tank 30 has a water inlet 31 and a water outlet 32. The main body 20 has a main body water inlet 202, and the water outlet 32 communicates with the main body water inlet 202, that is, the liquid stored in the water tank 30 to be supplied can be supplied to the main body 20 sequentially through the water outlet 32 and the main body water inlet 202.

The state of the water inlet 31 can be selectively set to any one of a closed state, a first state, and a second state; when the water inlet 31 is in the closed state, the water source of the main body 20 comes from the water tank 30; when the water inlet 31 is in the first state, the water inlet 31 communicates with a first water supply pipeline 41, and the water source of the main body 20 comes from a water distribution network 11 connected to the first water supply pipeline 41; when the water inlet 31 is in the second state, the water inlet 31 communicates with a second water supply pipeline 42, and the water source of the main body 20 comes from a barreled water source 12 connected to the second water supply pipeline 42.

The first water supply pipeline 41 is connected between the water inlet 31 and the water distribution network 11, with one end of the first water supply pipeline 41 connected to the water inlet 31 and the other end detachably connected to the water distribution network 11. An on-off valve 411 is provided on the first water supply pipeline 41, and the on-off valve 411 is configured to control connection or disconnection of the water passage from the water distribution network 11 to the water inlet 31. The second water supply pipeline 42 is connected between the water inlet 31 and the barreled water source 12, with one end of the second water supply pipeline 42 connected to the water inlet 31 and the other end detachably connected to the barreled water source 12. A first water pump 422 is provided on the second water supply pipeline 42, and the first water pump 422 is configured to drive water flow from the barreled water source 12 to the water inlet 31.

The state selection of the water inlet 31 can be made by users on a screen. For example, when a user selects automatic water supply on the screen, the on-off valve 411 on the first water supply pipeline 41 is opened when water replenishment is needed, and closed when water replenishment is completed. When the user selects barreled water on the screen, the first water pump 422 on the second water supply pipeline 42 is opened when water replenishment is needed, and closed when water replenishment is completed. When the user has selected neither automatic water supply nor barreled water, a signal for reminding the user to replenish water to the water tank is generated when water replenishment is needed, and the user can replenish water by detaching the water tank. Of course, users can also make remote selections through mobile devices, or the beverage machine can automatically switch based on the water supply conditions of the first water supply pipeline 41 and the second water supply pipeline 42.

Specifically, the main body 20 may include structures for supporting, mounting, or connecting functional components, such as housings, frames, supports, etc., and the main body 20 may also include functional components for preparing beverages, such as a beverage brewing device 21. The water tank 30 is used to store liquid to be supplied, which can be water or other liquids. For example, when the barreled water source 12 contains other liquids, the water tank 30 is filled with such liquid through the second water supply pipeline 42; or users can add other liquids to the water tank 30 themselves. The water distribution network 11 is usually the pipeline network that supplies water to household taps, i.e., tap water pipes. Liquid can be replenished into the water tank 30 through the water inlet 31 and supplied to the main body 20 through the water outlet 32, for example, supplied to the beverage brewing device 21 downstream of the water outlet 32, or supplied to the beverage outlet 24 of the beverage machine 100.

The water tank 30 can be replenished with water through tap water pipes, through the barreled water source 12, or by directly detaching the water tank 30, and users can select any of these three water replenishment modes according to usage scenarios, which greatly improves the scenario universality of the beverage machine; all three water replenishment modes first replenish water to the water tank, and then provide water to the main body 20 through the water outlet 32 of the water tank 30 for beverage preparation or output, the water pressure of water flowing out through the water outlet 32 of the water tank 30 has no fluctuation, which can simplify the control algorithm of the controller 25 and is beneficial for cup volume stability.

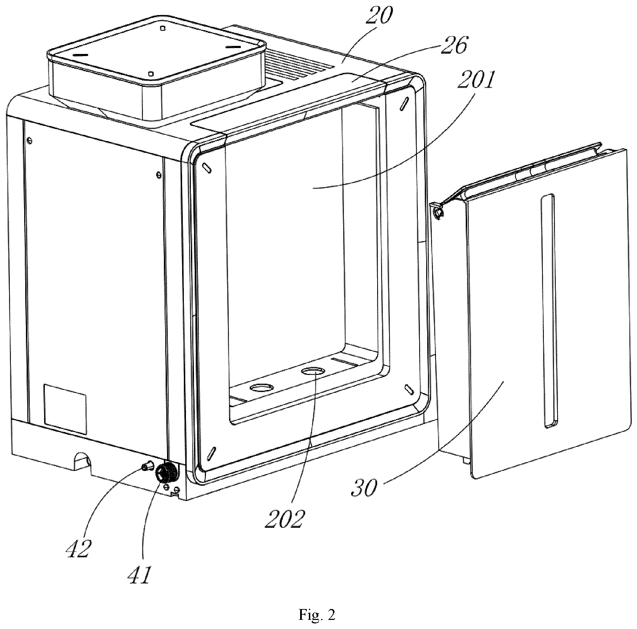

The main body 20 of the beverage machine 100 has a front portion provided with a beverage outlet 24, a rear portion opposite to the front portion, and two side portions, wherein one of the side portions has a recessed receiving cavity 201, and the water tank 30 can be installed vertically in the receiving cavity 201, with the outer wall of the water tank 30 being flush with the side portion of the beverage machine 100. The beverage machine 100 may also include a water tank cover 26 pivotally connected to the main body 20, as shown in Figs. 1 and 2. The water tank cover 26 is provided above the water tank 30 and is used to cover the opening of the water tank 30 for dust protection; after opening the water tank cover 26 by side-flip rotation, the water tank 30 can be detached and installed vertically, making the detachment and installation of the water tank 30 very convenient, and the overall beverage machine 100 more compact. Of course, when the water tank 30 itself can achieve dust protection or does not require dust protection, the beverage machine 100 does not need to be provided with the water tank cover 26, making vertical detachment and installation of the water tank 30 more convenient.

In other embodiments, the main body 20 has a front portion provided with a beverage outlet 24, a rear portion opposite to the front portion, and two side portions, wherein the front portion has a recessed receiving cavity, and the water tank 30 is installed horizontally in the receiving cavity, with the outer wall of the water tank 30 being flush with the front portion of the main body 20.

Optionally, the beverage machine 100 further includes a first liquid level sensor and a controller 25, wherein the first liquid level sensor is configured to detect a liquid level height in the water tank 30, and the controller 25 is communicatively connected to the first liquid level sensor. As the liquid level height is lower than a first liquid level height: when the water inlet 31 is in the first state, the controller 25 controls the on-off valve 411 to open to replenish water to the water tank 30 through the first water supply pipeline 41; when the water inlet 31 is in the second state, the controller 25 controls the first water pump 422 to open to replenish water to the water tank 30 through the second water supply pipeline 42; when the water inlet 31 is in the closed state, the controller 25 generates a signal for reminding a user to replenish water to the water tank 30, to remind the user to detach the water tank 30 for manual water replenishment.

The first liquid level height can be a low liquid level height of the water tank 30, indicating that the water in the water tank 30 has been or is about to be consumed. During the process of water supply from the water tank 30 to the main body 20, when the liquid level in the water tank 30 is lower than the first liquid level height, it indicates that the water tank 30 needs water replenishment. When the user chooses to replenish water to the water tank 30 through the water distribution network 11 or barreled water source 12, the controller 25 controls automatic water replenishment of the water tank 30 based on the signal detected by the first liquid level sensor, requiring no manual monitoring, and the entire process can be performed automatically, improving the efficiency of beverage preparation by the beverage machine 100. When the user chooses to manually replenish water to the water tank 30 by detaching it, the controller 25 generates a replenishment signal based on the signal detected by the first liquid level sensor to remind the user to detach the water tank 30 for manual water replenishment. Any of the three water replenishment modes can replenish water to the water tank 30, making it convenient for users to select the water replenishment mode for the water tank 30 according to usage scenarios, ensuring that the beverage machine 100 is not limited by usage scenarios and achieving scenario universality.

In some embodiments, the first liquid level sensor is constructed as a first pressure sensor 55, and the first pressure sensor 55 is configured to detect medium pressure indicating the liquid level in the water tank 30 and generate a first pressure signal, wherein the first pressure signal is used to form the liquid level height of the water tank 30. As the liquid level height is higher than a second liquid level height: when the water inlet 31 is in the first state, the controller 25 controls the on-off valve 411 to close; when the water inlet 31 is in the second state, the controller 25 controls the first water pump 422 to close.

Specifically, the second liquid level height can be a high liquid level height or a full water level height of the water tank 30, indicating that the water tank 30 is full. During the process of water replenishment to the water tank 30, when the liquid level in the water tank 30 is higher than the second liquid level height, it indicates that the water tank 30 needs to stop water replenishment. When the user replenishes water to the water tank 30 through the water distribution network 11 or barreled water source 12, the controller 25 can also control automatic stop of water replenishment to the water tank 30 based on the signal detected by the first liquid level sensor. Both water replenishment and stopping can be performed automatically without manual monitoring, which can reduce labor costs. The first pressure sensor 55 converts the received pressure into an electrical signal, and the pressure signal can be transformed into liquid level information of the water tank 30, thereby enabling real-time monitoring of the liquid level in the water tank 30, and real-time display of the water tank 30's liquid level status on an external display screen.

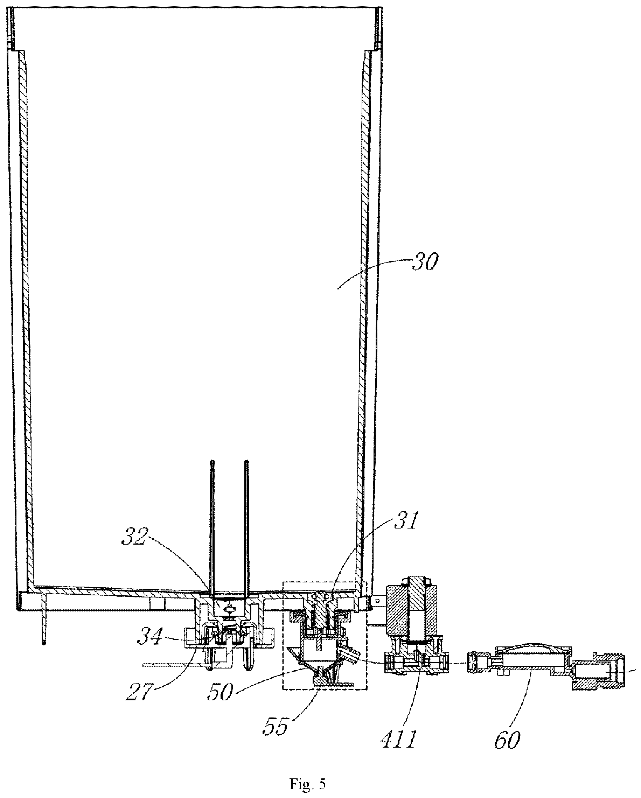

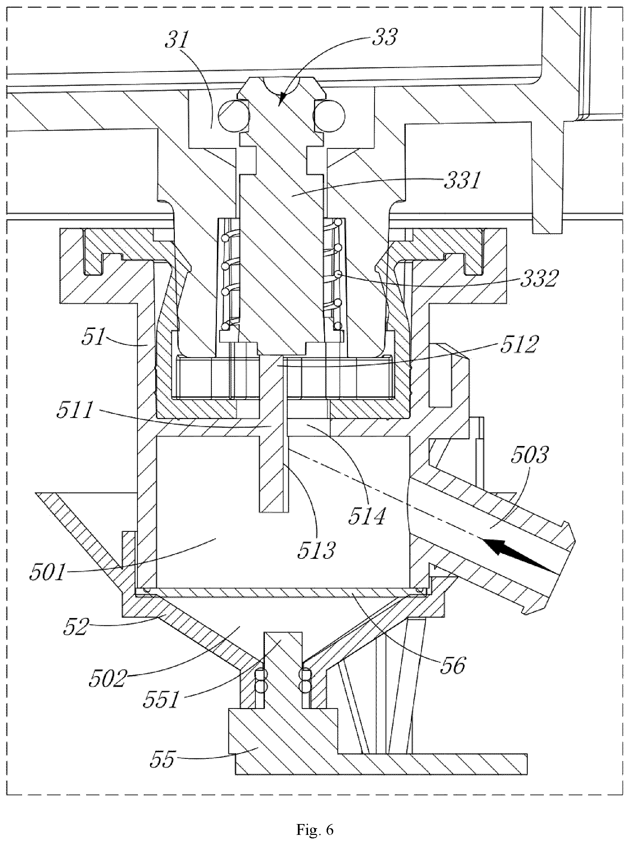

Referring to Figs. 5 and 6, a water inlet seat 50 is provided on the main body 20, the water inlet seat 50 is detachably connected to the water tank 30, the water inlet seat 50 is provided at the water inlet 31, the water inlet seat 50 includes a water inlet chamber 501, both the first water supply pipeline 41 and the second water supply pipeline 42 communicate with the water inlet 31 through the water inlet chamber 501, the first pressure sensor 55 is connected to the water inlet seat 50 and configured to provide a first pressure signal indicating pressure in the water inlet chamber 501, and the controller 25 converts the first pressure signal into the liquid level height in the water tank 30. The first pressure sensor 55 is arranged at the water inlet 31, avoiding interference with liquid level detection caused by liquid fluctuation during water output, improving the accuracy of liquid level detection, and ensuring the reliability of real-time liquid level monitoring. The arrangement of the first pressure sensor 55 at the water inlet 31 can also save space in the water tank 30, and the water tank 30 has no sanitary dead angles, making it easy to clean.

The water inlet seat 50 includes a main part 51 and a cover component 52 connected to the main part 51, the water inlet seat 50 further includes a first diaphragm 56 provided between the main part 51 and the cover component 52; the water inlet chamber 501 is jointly defined by the main part 51 and the first diaphragm 56, the cover component 52 and the first diaphragm 56 jointly define a sealing chamber 502, pressure is transmitted between the water inlet chamber 501 and the sealing chamber 502 via the first diaphragm 56, and the first pressure sensor 55 detects pressure in the sealing chamber 502 and generates the first pressure signal. The water inlet chamber 501 and the sealing chamber 502 are separated by the first diaphragm 56, the liquid pressure in the water tank 30 can act on the sealing chamber 502 through the water inlet chamber 501, the first pressure sensor 55 detects the pressure in the sealing chamber 502 and converts the received pressure into a first pressure signal, which can be transformed into liquid level information of the water tank 30, thereby enabling real-time monitoring of the liquid level in the water tank 30. The first diaphragm 56 can separate the water inlet chamber 501 and the sealing chamber 502, making them independent of each other, and the sealing chamber 502 can be a sealed air chamber. The first diaphragm 56 can transmit the pressure of liquid in the water inlet chamber 501 to the air in the sealing chamber 502 on the other side, and the air transmits the pressure to the first pressure sensor 55.

The first diaphragm 56 serves to isolate water and air, making the sealing chamber 502 on the other side completely sealed and independent. The first pressure sensor 55 is isolated from liquid, which can extend the service life of the first pressure sensor 55. The first pressure sensor 55 also does not need to use expensive waterproof pressure sensors, resulting in lower cost while making the water inlet seat 50 easy to clean. The first diaphragm 56 is configured as a silicone diaphragm, which can reliably isolate air and water with good sealing performance.

The main part 51 is detachably connected to the water tank 30. As shown in Fig. 6, the main part 51 is provided with an inlet passage 503 communicating with the water inlet chamber 501, both the first water supply pipeline 41 and the second water supply pipeline 42 communicate with the inlet passage 503. The water inlet chamber 501 has a first end near the water inlet 31 and a second end near the first diaphragm 56, with the first end and second end arranged opposite to each other. The first end is arranged in the entry direction of the inlet passage 503, while the second end is not arranged in the liquid entry direction of the inlet passage 503. Thus, when liquid enters the water inlet chamber 501 through the inlet passage 503, the liquid flow will not directly impact the first diaphragm 56, preventing the impact force of liquid flow during liquid entry from affecting the detection results of the first pressure sensor 55.

Here, the liquid entry direction can be understood as the flow direction of liquid flow formed in the inlet passage 503, which can be referenced by the arrow direction shown in Fig. 6.

A blocking portion 513 is provided in the water inlet chamber 501, and the blocking portion 513 is arranged in the liquid entry direction of the inlet passage 503. As shown in Fig. 6, optionally, the main part 51 is provided with a blocking portion 513 extending into the water inlet chamber 501, the extending direction of the blocking portion 513 intersects with the liquid entry direction of the inlet passage 503, and the entry direction of the inlet passage 503 on the water inlet seat 50 faces toward the blocking portion 513. The liquid entry direction of the inlet passage 503 on the water inlet seat 50 faces toward the blocking portion 513, which can block the liquid flow from the inlet passage 503, preventing the liquid flow from directly impacting the first diaphragm 56 and affecting the detection of the first pressure sensor 55.

Specifically, the first pressure sensor 55 is connected to the cover component 52, the sealing chamber 502 is configured as a conical cavity, and the first pressure sensor 55 includes a pressure detection portion 551 that extends through the cover component 52 into the sealing chamber 502. Optionally, as shown in Fig. 6, the sealing chamber 502 is configured as an inverted conical cavity. The inverted conical sealing chamber 502 can make the connection between the cover component 52 and the main part 51 more reliable, facilitate the connection between the first pressure sensor 55 and the cover component 52, and reduce the overall cost of the water inlet seat 50.

In some embodiments, the water inlet 31 is provided at the bottom or the side position near the bottom of the water tank 30, and correspondingly, the water inlet seat 50 can also be provided at the bottom or the side position near the bottom of the water tank 30. The liquid in the water tank 30 enters the water inlet chamber 501 through the water inlet 31 under gravity, and the liquid pressure in the water tank 30 is transmitted to the sealing chamber 502 of the water inlet seat 50 through the water inlet 31 and water inlet chamber 501, making pressure transmission more reliable while simplifying the connection between the water tank 30 and the water inlet seat 50.

The water outlet 32 is provided at the bottom or at the side position near the bottom of the water tank 30, allowing liquid discharge by gravity, making the structure of the main body 20 compact with high space utilization.

The water outlet 32 and water inlet 31 can be provided on the same side of the water tank 30, both can be provided at the bottom of the water tank 30, or both can be provided at one side of the water tank 30. This not only achieves high space utilization and compact structure but also facilitates water tank 30 detachment with strong operability.

The water inlet 31 can be provided together with the water outlet 32 at the bottom of the water tank 30, facilitating pipeline connection and making it convenient for the water tank 30 to connect with or separate from the water inlet seat 50 along the vertical direction, thereby facilitating manual removal of the water tank 30 for liquid addition. The water inlet 31 can also be provided together with the water outlet 32 at the side of the water tank 30, facilitating horizontal connection or separation between the water tank 30 and the water inlet seat 50, and also facilitating manual removal of the water tank 30 for liquid addition. The water inlet seat 50 can be designed as a hidden structure within the main body 20, facilitating water tank 30 assembly and disassembly, and achieving silent water inlet for the water tank 30.

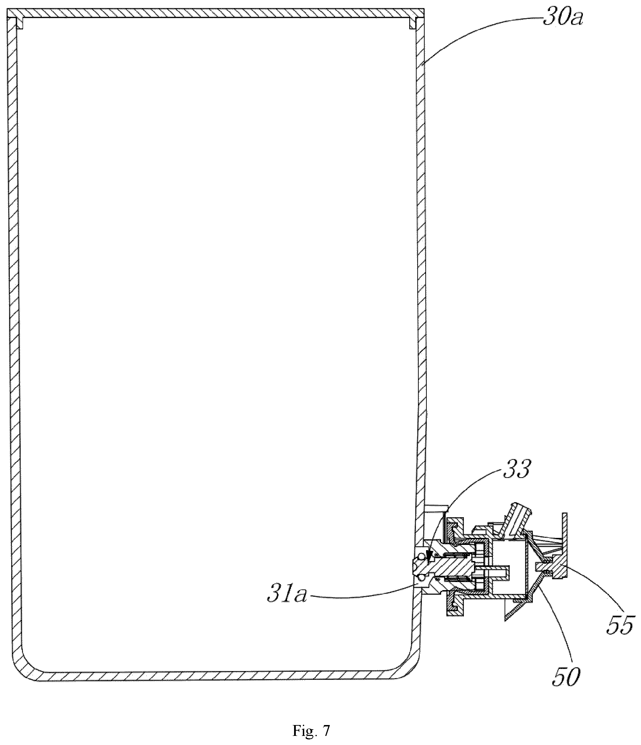

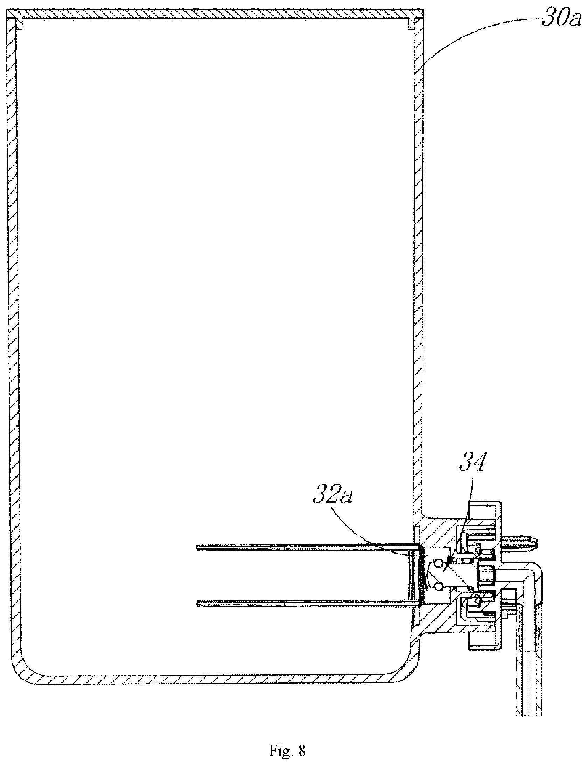

Referring to Figs. 7 and 8, in some embodiments, the water inlet 31a is provided at the side of the water tank 30a, preferably near the bottom of the water tank 30a, and the water inlet seat 50 can also be provided at the side of the water tank 30a. The water tank 30a and water inlet chamber 501a form a communicating vessel through the water inlet 31a, allowing liquid in the water tank 30a to enter the water inlet chamber 501 under gravity through the water inlet 31a. The pressure in the water tank 30a can also be transmitted to the sealing chamber 502 through the water inlet 31a and water inlet chamber 501, enabling liquid level detection of the water tank 30a through the first pressure sensor 55. The side placement of the water inlet 31a on the water tank 30a allows for more flexible configuration and application scenarios. For example, the side placement of the water inlet 31a on the water tank 30a is suitable for horizontal pull-out application scenarios of the water tank 30a.

In some embodiments, the water tank 30, 30a is detachably connected to the main body 20. As shown in Figs. 5 to 8, one side of the water tank 30, 30a is provided with a water inlet check valve 33 and a water outlet check valve 34, wherein the water inlet check valve 33 is configured to close or open the water inlet 31, and the water outlet check valve 34 is configured to close or open the water outlet 32. The main body 20 is provided with a water inlet seat 50 and a water outlet seat 27, the water tank 30, 30a is detachably connected to the main body 20, the water inlet seat 50 cooperates with the water inlet check valve 33 to open the water inlet 31, and the water outlet seat 27 cooperates with the water outlet check valve 34 to open the water outlet 32. When the water tank 30 is removed from the main body 20, the water outlet seat 27 disengages from the water outlet check valve 34, and the water inlet seat 50 disengages from the water inlet check valve 33. At this time, the water outlet check valve 34 closes the water outlet 32, and the water inlet check valve 33 closes the water inlet 31, preventing liquid in the water tank 30 from flowing out through the water inlet 31 and water outlet 32. When the water tank 30 is assembled to the main body 20, the water outlet seat 27 cooperates with the water outlet check valve 34, and the water inlet seat 50 cooperates with the water inlet check valve 33. At this time, the water outlet check valve 34 opens the water outlet 32, and the water inlet check valve 33 opens the water inlet 31, allowing liquid in the water inlet chamber 501 to enter the water tank 30 through the water inlet 31, and liquid in the water tank 30 can be supplied to the main body 20 through the water outlet 32.

One side of the water tank 30 can be either the bottom or the side of the water tank 30. When the water inlet 31 and water outlet 32 are both provided at the bottom of the water tank 30, the water tank 30 can be separated from the main body 20 by lifting it upward. When the water inlet 31 and water outlet 32 are both provided at one side of the water tank 30a, the water tank 30 can be separated from the main body 20 by pulling it horizontally outward. The detachment and installation of the water tank 30, 30a are very convenient, providing good user experience.

Specifically, the water inlet seat 50 is provided with a trigger portion 512 protruding toward the water tank 30. Referring to Fig. 6, optionally, the trigger portion 512 is provided on the main part 51, and the trigger portion 512 abuts against the water inlet check valve 33 to open the water inlet 31. The main part 51 is provided with a water passage hole 514, and the water inlet chamber 501 communicates with the water inlet 31 through the water passage hole 514. The blocking portion 513 is provided on the side of the water passage hole 514 facing the water inlet chamber 501, with the blocking portion 513 and the trigger portion 512 provided on opposite sides of the water passage hole 514.

When the water tank 30 is connected to the water inlet seat 50, the water inlet check valve 33 opens the water inlet 31 under the pressing action of the trigger portion 512, enabling water replenishment to the water tank 30 from either the first water supply pipeline 41 or the second water supply pipeline 42. When the water tank 30 is separated from the water inlet seat 50, the water inlet check valve 33 can automatically return to a state of sealing the water inlet 31. The water inlet check valve 33 includes a movable post 331 and an elastic reset member 332, with the elastic reset member 332 provided between the movable post 331 and the water tank 30. The trigger portion 512 abuts against the movable post 331, driving the movable post 331 to move upward against the elastic force of the elastic reset member 332, thereby opening the water inlet 31. When the water tank 30 is separated from the water inlet seat 50, the movable post 331 resets under the elastic force of the elastic reset member 332 to seal the water inlet 31, preventing liquid in the water tank 30 from flowing out through the water inlet 31, allowing convenient detachment of the water tank 30 from the water inlet seat 50 for manual liquid addition.

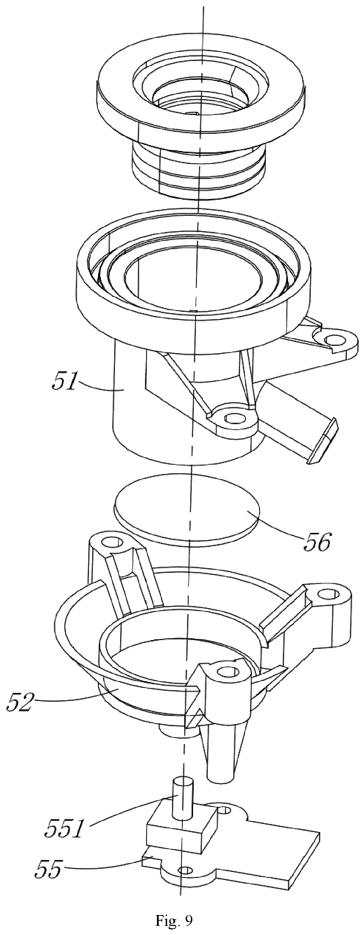

Referring to Figs. 6 and 9, a blocking rib 511 is provided in the water passage hole 514, extending toward both sides of the water passage hole 514. The portion of the blocking rib 511 extending into the water inlet chamber 501 is configured as the blocking portion 513, while another portion of the blocking rib 511 is configured as the trigger portion 512. Optionally, the blocking rib 511 is provided in the middle of the water passage hole 514. Both the trigger portion 512 and blocking portion 513 are provided on the blocking rib 511, with the trigger portion 512 near the center of the water passage hole 514, providing more uniform force when pressing against the water inlet check valve 33, while the blocking portion 513 can block and buffer the water inlet from the inlet passage 503, preventing large liquid fluctuations from affecting the detection of the first pressure sensor 55. Additionally, a reinforcing rib 515 is provided on the side of the blocking rib 511 facing away from the water passage hole, enhancing the structural strength of the blocking rib 511.

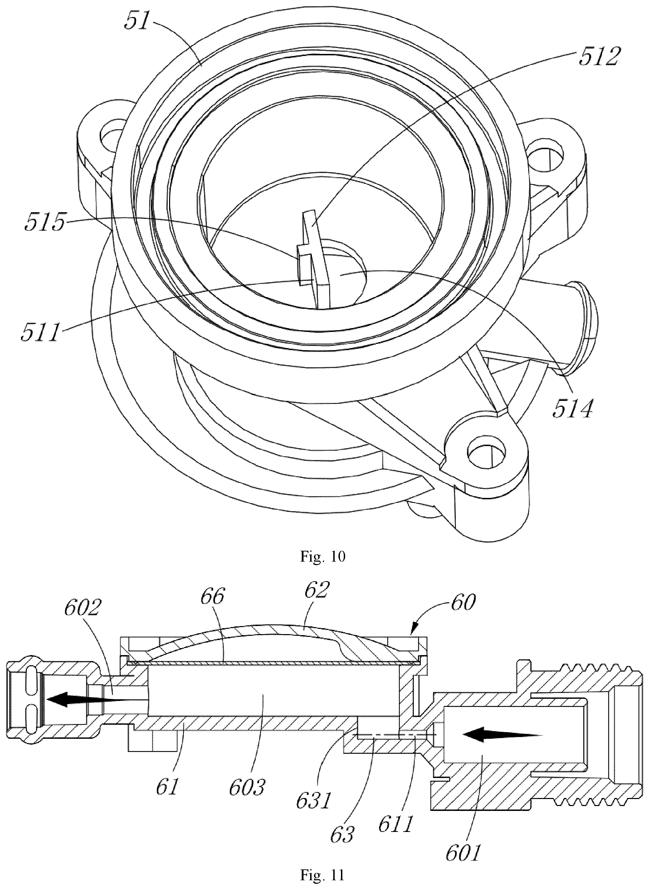

Referring to Figs. 5 and 11, a buffer seat 60 is provided on the first water supply pipeline 41, positioned between the on-off valve 411 and the water distribution network 11. Optionally, the buffer seat 60 is provided upstream of the on-off valve 411 and has an inlet channel 601, an outlet channel 602, and a buffer chamber 603. The buffer chamber 603 is provided between the inlet channel 601 and the outlet channel 602, with part of the chamber wall of the buffer chamber 603 configured as a second diaphragm 66.

In some embodiments, both the inlet channel 601 and outlet channel 602 extend horizontally, with the second diaphragm 66 participating in defining the buffer chamber 603.

Part of the chamber wall of the buffer chamber 603 is configured as the second diaphragm 66, which serves to absorb the kinetic energy of liquid flow and buffer complex liquid flow conditions. Without the second diaphragm 66 and buffer chamber 603, the impact from liquid flow during water intake through the water distribution network 11 and first water supply pipeline 41 would prevent accurate detection by the first pressure sensor 55 in the water inlet seat 50. The second diaphragm 66 can also be configured as a silicone diaphragm, providing reliable sealing of the buffer chamber 603.

When automatic water intake occurs through the first water supply pipeline 41, the water flow creates an impact force. Due to this impact, the detection results from the first pressure sensor 55 in the water inlet seat 50 would be erroneously high. The buffer seat 60 is installed to reduce the impact of liquid flow, ensuring accurate measurements by the first pressure sensor 55 on the water inlet seat 50, while also preventing splashing during water intake into the water tank 30.

The inlet channel 601 forms a flow restricting hole 611 at an end facing the buffer chamber 603, where the cross-sectional area of the inlet channel 601 is smallest at the flow restricting hole 611, and the minimum cross-sectional area of the outlet channel 602 is larger than that of the flow restricting hole 611. A liquid blocking portion 631 is provided in the buffer chamber 603, positioned in the liquid inflow direction of the inlet channel 601, with an extending direction of the liquid blocking portion 631 intersecting with the liquid outflow direction of the outlet channel 602.

The flow restricting hole 611 reduces the inlet cross-sectional area of the inlet channel 601, thereby reducing liquid flow rate and providing a throttling effect. The larger minimum cross-sectional area of the outlet channel 602 compared to the flow restricting hole 611 serves to reduce liquid flow velocity, further reducing the impact on the first pressure sensor 55. When the cross-sectional area of the flow restricting hole 611 is small, the flow velocity is relatively fast, and splashing may occur at the water inlet 31 of the water tank 30 under high water pressure. The liquid blocking portion 631 blocks liquid flow from the inlet channel 601, reducing flow velocity and providing additional buffering effect.

Specifically, the minimum cross-sectional area of the outlet channel 602 is 2 to 5 times that of the flow restricting hole 611, and/or the diameter of the flow restricting hole 611 is between 1mm and 1.5mm. If the cross-sectional area of the flow restricting hole 611 is too small, the flow velocity becomes too slow to meet the flow rate requirements for final beverage output; if too large, splashing may occur at the water inlet 31 of the water tank 30 when the liquid flow pressure from the water distribution network 11 is high. These specifications for the cross-sectional areas of the inlet and outlet channels both satisfy the flow rate requirements for final beverage output and prevent splashing at the water inlet 31 of the water tank 30.

The liquid blocking portion 631 is positioned in the inflow direction of the inlet channel 601, with the extending direction of the liquid blocking portion 631 intersecting with the liquid outflow direction of the outlet channel 602. It blocks liquid flow from the inlet channel 601, reducing flow velocity and providing additional buffering effect. The liquid flow, after changing direction due to the liquid blocking portion 631, exits through the outlet channel 602.

Optionally, the buffer seat 60 includes a base seat 61 and a pressure cover 62 connected to the base seat 61, with the second diaphragm 66 positioned between the base seat 61 and pressure cover 62. The second diaphragm 66 and base seat 61 jointly define the buffer chamber 603, and the outflow direction of the outlet channel 602 is not collinear with the inflow direction of the inlet channel 601. As shown in Fig. 8, the horizontal position of the outlet channel 602 is higher than that of the inlet channel 601.

Here, the liquid inflow direction can be understood as the flow direction of liquid in the inlet channel 601, as indicated by the arrow direction in the inlet channel 601 in Fig. 11, while the liquid outflow direction can be understood as the flow direction of liquid in the outlet channel 602, as indicated by the arrow direction in the outlet channel 602 in Fig. 11.

A recess 63 is provided in the region of the buffer chamber 603 near the inlet channel 601, with the side wall of the recess 63 formed as the liquid blocking portion 631, thus simplifying the structure of the buffer seat 60 and facilitating manufacturing to reduce costs.

In some embodiments, the on-off valve 411 is provided between the buffer seat 60 and the water inlet seat 50. The on-off valve 411 can control water inlet to the water tank 30, closing to stop water intake when the pressure signal detected by the first pressure sensor 55 indicates that the liquid in the water tank 30 has reached the second level. During beverage preparation or output, the first pressure sensor 55 operates normally, monitoring the liquid level of the water tank 30 in real-time and displaying the current level. When the pressure signal detected by the first pressure sensor 55 indicates that the liquid in the water tank 30 has reached the first level, the on-off valve 411 opens to continue replenishing liquid to the water tank 30.

The installation of the first pressure sensor 55 and on-off valve 411 enables full liquid detection when replenishing the water tank 30 through the first water supply pipeline 41, real-time liquid level monitoring of the water tank 30, and automatic liquid replenishment when the water tank 30 reaches a lowest liquid level. The second water supply pipeline 42 can replenish liquid to the water tank 30 by starting the first water pump 422 and stop by closing the first water pump 422. The water tank 30 can also be detached from the main body 20 for manual liquid replenishment, allowing the beverage machine 100 to simultaneously accommodate three water replenishment modes, making it applicable to more scenarios and providing users with more choices. Whether through the first water supply pipeline 41 or the second water supply pipeline 42, water is supplied to the main body 20 through the water tank 30, such as supplying water to the downstream beverage brewing device 21, avoiding water pressure fluctuations in the supply to the main body 20 and benefiting cup volume stability.

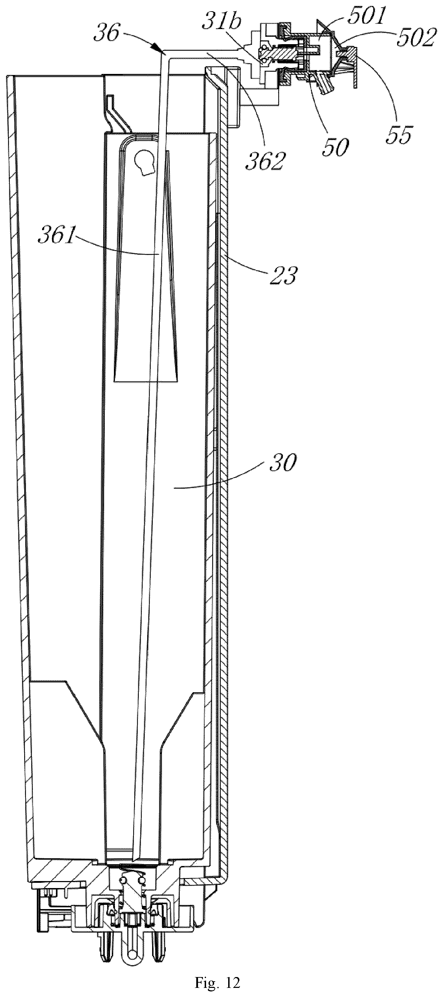

Referring to Fig. 12, in another embodiment, the beverage machine 100 further includes a pipe 36 extending from the inlet of the water tank 30 to the bottom of the water tank 30. The water inlet 31b is provided above the second liquid level height of the water tank 30, and the water inlet 31b communicates with the water tank 30 through the pipe 36, which extends to the bottom of the water tank 30. The inlet of the pipe 36 connects to the water inlet 31, and the pipe 36 communicates with the water inlet chamber 501 through the water inlet 31b. The pressure of liquid in the water tank 30 can be transmitted to the water inlet chamber 501 through the pipe 36. The first pressure sensor 55 is connected to the water inlet seat 50 at the water inlet 31b, and can similarly form the liquid level height in the water tank 30 by detecting the pressure in the sealing chamber 502.

Specifically, the pipe 36 includes a first section 361 extending into the water tank 30 and a second section 362 located above the water tank 30, with the first pressure sensor 55 connected to the second section 362. The first pressure sensor 55 is positioned above the full water level of the water tank 30, allowing for more flexible water supply pipeline arrangement and more compact internal component layout in the beverage machine 100.

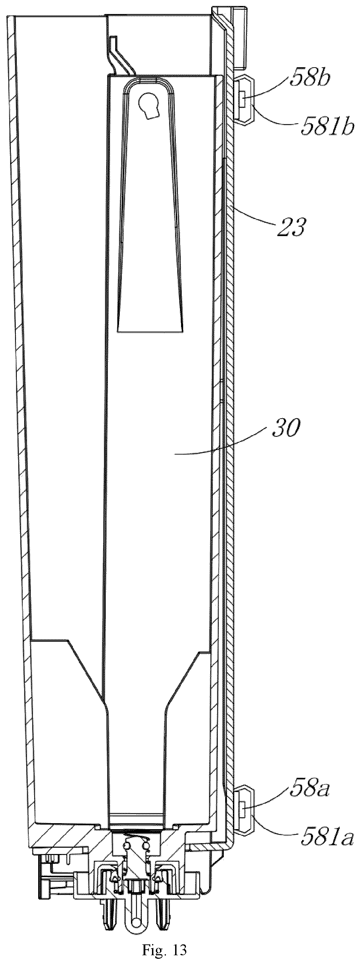

Referring to Fig. 13, in another embodiment, the first liquid level sensor is configured as a first capacitive sensor 58a, positioned at a location corresponding to the first liquid level height of the water tank 30. The controller 25 determines that the liquid level height is at the first liquid level height based on the signal from the first capacitive sensor 58a. Additionally, a moisture-proof cover 581a can be provided on the main body 20, covering the first capacitive sensor 58a to protect it.

Using the first capacitive sensor 58a to detect the first liquid level height provides a simple structure with no cleaning dead zones in the water tank 30.

Optionally, the beverage machine 100 further includes a second liquid level sensor, which is configured to detect the liquid level height in the water tank 30. The second liquid level sensor is communicatively connected to the controller 25, and based on the signal detected by the second liquid level sensor indicating the second liquid level height: when the water inlet 31 is in the first state, the controller 25 controls the on-off valve 411 to close; when the water inlet 31 is in the second state, the controller 25 controls the first water pump 422 to close. The second liquid level height corresponds to the full water level height of the water tank 30.

The second liquid level sensor can be used together with either the first pressure sensor 55 or the first capacitive sensor 58a for liquid level detection. When used with the first pressure sensor 55, during the water tank 30 filling process, the impact of water flow affects the first pressure sensor 55 in the water inlet seat 50, causing significant external interference when sensing rising water levels and leading to inaccurate readings that fail to correctly reflect actual water volume. Adding the second liquid level sensor 58 for full water monitoring during water tank 30 filling can improve the accuracy of full water detection.

Optionally, the second liquid level sensor is configured as a second capacitive sensor 58b, and the controller 25 determines that the liquid level height is at the second liquid level height based on the signal from the second capacitive sensor 58b. The main body 20 includes a support member 23 adjacent to the water tank 30, with the second capacitive sensor 58b mounted on the support member 23. The first capacitive sensor 58a can also be mounted on the support member 23. The second capacitive sensor 58b has a simple structure with no cleaning dead zones. Full water detection through the second capacitive sensor 58b provides high accuracy and can prevent the risk of water overflow during automatic water tank 30 filling. Additionally, a moisture-proof cover 581b can be provided on the main body 20, covering the second capacitive sensor 58b to protect it.

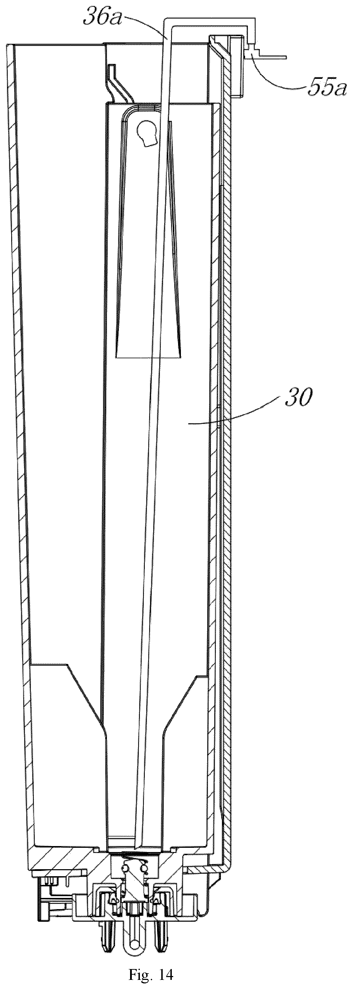

Referring to Fig. 14, in some embodiments, the second liquid level sensor is configured as a second pressure sensor 55a positioned above the second liquid level height. A pipe 36a is provided between the water tank 30 and the second pressure sensor 55a for pressure transmission. The second pressure sensor 55a is configured to detect the medium pressure in the pipe 36a and generate a second pressure signal, which is used to form the liquid level height of the water tank 30. As the liquid level height is higher than the second liquid level height: when the water inlet 31 is in the first state, the controller 25 controls the on-off valve 411 to close; when the water inlet 31 is in the second state, the controller 25 controls the first water pump 422 to close.

The liquid in the water tank 30 creates pressure on the air in the pipe 36a. The second pressure sensor 55a generates a second pressure signal and sends it to the controller 25. The controller 25 calculates the water level in the water tank 30 based on the pressure difference between the air pressure and atmospheric pressure, thereby knowing the water level and preventing overflow from excessive water filling.

The aforementioned beverage machine can be suitable for multiple scenarios and can be a tea machine, coffee machine, etc. Coffee machines include capsule coffee machines, semi-automatic coffee machines, and fully automatic coffee machines. Regardless of the type of beverage machine, all can implement the following three water intake methods:

The first water intake method uses the water distribution network 11, introducing water from the tap to the buffer seat 60, then through the on-off valve 411, water inlet seat 50, and water inlet 31 of the water tank 30 into the water tank 30, then outputting to the main body 20 through the water outlet 32 of the water tank 30, specifically through a flow meter and second water pump 423 to the downstream beverage brewing device 21.

The second water intake method uses the barreled water source 12, where the first water pump 422 draws water from the barreled water source 12, flowing through the water inlet seat 50 and water inlet 31 into the water tank 30, then outputting to the main body 20 through the water outlet 32 of the water tank 30, specifically through a flow meter and second water pump 423 to the downstream beverage brewing device 21.

The third water intake method involves removing the water tank 30 from the main body 20 for water filling, with water flowing to the main body 20 through the water outlet 32 of the water tank 30, specifically through a flow meter and second water pump 423 to the downstream beverage brewing device 21.

All three water intake methods replenish water to the water tank 30 first, then output to the main body 20 through the water outlet 32 of the water tank 30, specifically providing water to the downstream beverage brewing device 21. The water pressure flowing out through the water outlet 32 of the water tank 30 has no fluctuation, which can simplify the control algorithm of the controller 25 and avoid water pressure fluctuations, benefiting cup volume stability.

It should be understood that although this specification describes various embodiments, each embodiment does not necessarily contain only one independent technical solution. This method of description in the specification is merely for clarity. Those skilled in the art should take the specification as a whole, and the technical solutions in various embodiments can also be appropriately combined to form other embodiments that can be understood by those skilled in the art.

## Claims

1. A beverage machine (100), comprising:
a main body (20) having a main body water inlet (202);
a water tank (30, 30a) detachably connected to the main body (20), wherein the water tank (30, 30a) has a water inlet (31) and a water outlet (32), and the water outlet (32) is in communication with the main body water inlet (202);
**characterized in that**, the water inlet (31) is configured to be selectively set to any one of a closed state, a first state, or a second state; when the water inlet (31) is in the closed state, a water source of the main body (20) comes from the water tank (30, 30a); when the water inlet (31) is in the first state, the water inlet (31) is in communication with a first water supply pipeline (41), and the water source of the main body (20) comes from a water distribution network (11) connected to the first water supply pipeline (41); when the water inlet (31) is in the second state, the water inlet (31) is in communication with a second water supply pipeline (42), and the water source of the main body (20) comes from a barreled water source (12) connected to the second water supply pipeline (42);
wherein an on-off valve (411) is provided on the first water supply pipeline (41), and the on-off valve (411) is configured to control connection or disconnection of a water passage from the water distribution network (11) to the water inlet (31); a first water pump (422) is provided on the second water supply pipeline (42), and the first water pump (422) is configured to drive water flow from the barreled water source (12) to the water inlet (31);
a first liquid level sensor configured to detect a liquid level height in the water tank (30, 30a); and
a controller (25), wherein the controller (25) is communicatively connected to the first liquid level sensor;
as the liquid level height is lower than a first liquid level height: when the water inlet (31) is in the first state, the controller (25) controls the on-off valve (411) to open to replenish water to the water tank (30, 30a) through the first water supply pipeline (41); when the water inlet (31) is in the second state, the controller (25) controls the first water pump (422) to open to replenish water to the water tank (30, 30a) through the second water supply pipeline (42); when the water inlet (31) is in the closed state, the controller (25) generates a signal for reminding a user to replenish water to the water tank (30, 30a).

2. The beverage machine (100) according to claim 1, wherein the water inlet (31) and the water outlet (32) are provided on a same side of the water tank (30, 30a), and the arrangement of the water inlet (31) and the water outlet (32) satisfies one of the following features:
the water inlet (31) and the water outlet (32) are both provided at the bottom of the water tank (30);
the water inlet (31) and the water outlet (32) are both provided at one side of the water tank (30a).

3. The beverage machine (100) according to claim 1 or 2, wherein the first liquid level sensor is configured as a first pressure sensor (55), and the first pressure sensor (55) is configured to detect medium pressure indicating the liquid level in the water tank (30, 30a) and generate a first pressure signal, wherein the first pressure signal is used to form the liquid level height of the water tank (30, 30a);
as the liquid level height is higher than a second liquid level height: when the water inlet (31) is in the first state, the controller (25) controls the on-off valve (411) to close; when the water inlet (31) is in the second state, the controller (25) controls the first water pump (422) to close.

4. The beverage machine (100) according to claim 3, wherein the main body (20) is provided with a water inlet seat (50) detachably connected to the water tank (30, 30a), the water inlet seat (50) is provided at the water inlet (31), the water inlet seat (50) comprises a water inlet chamber (501), the first water supply pipeline (41) and the second water supply pipeline (42) are both in communication with the water inlet (31) through the water inlet chamber (501), the first pressure sensor (55) is connected to the water inlet seat (50) and configured to provide the first pressure signal indicating pressure in the water inlet chamber (501), and the controller (25) converts the first pressure signal into the liquid level height in the water tank (30, 30a).

5. The beverage machine (100) according to claim 4, wherein the water inlet seat (50) comprises a main part (51) and a cover component (52) connected to the main part (51), the water inlet seat (50) further comprises a first diaphragm (56) provided between the main part (51) and the cover component (52); the water inlet chamber (501) is jointly defined by the main part (51) and the first diaphragm (56), the cover component (52) and the first diaphragm (56) jointly define a sealing chamber (502), pressure is transmitted between the water inlet chamber (501) and the sealing chamber (502) via the first diaphragm (56), and the first pressure sensor (55) detects pressure in the sealing chamber (502) and generates the first pressure signal; wherein the main part (51) is detachably connected to the water tank (30, 30a), the main part (51) is provided with an inlet passage (503) communicating with the water inlet chamber (501), the first water supply pipeline (41) and the second water supply pipeline (42) both communicate with the inlet passage (503), a blocking portion (513) is provided in the water inlet chamber (501), the blocking portion (513) is provided in a liquid entry direction of the inlet passage (503), and an extending direction of the blocking portion (513) intersects with the liquid entry direction of the inlet passage (503).

6. The beverage machine (100) according to any one of the preceding claims, wherein a buffer seat (60) is further provided on the first water supply pipeline (41), the buffer seat (60) is provided upstream of the on-off valve (411), the buffer seat (60) has an inlet channel (601), an outlet channel (602) and a buffer chamber (603), the buffer chamber (603) is provided between the inlet channel (601) and the outlet channel (602), and a part of chamber walls of the buffer chamber (603) is configured as a second diaphragm (66).

7. The beverage machine (100) according to claim 6, wherein the inlet channel (601) forms a flow restricting hole (611) at an end facing the buffer chamber (603), the inlet channel (601) has a minimum cross-sectional area at the flow restricting hole (611), and a minimum cross-sectional area of the outlet channel (602) is larger than a cross-sectional area of the flow restricting hole (611); wherein a liquid blocking portion (631) is provided in the buffer chamber (603), the liquid blocking portion (631) is provided in a liquid inflow direction of the inlet channel (601), and an extending direction of the liquid blocking portion (631) intersects with a liquid outflow direction of the outlet channel (602).

8. The beverage machine (100) according to claim 3, further comprising a pipe (36) extending from an inlet of the water tank (30, 30a) to the bottom of the water tank (30, 30a), wherein the water inlet (31b) is provided above the second liquid level height of the water tank (30, 30a), an inlet of the pipe (36) is connected to the water inlet (31b), the pipe (36) comprises a first section (361) extending into the water tank (30, 30a) and a second section (362) located above the water tank (30, 30a), and the first pressure sensor (55) is connected to the second section (362).

9. The beverage machine (100) according to any one of the preceding claims, wherein the first liquid level sensor is configured as a first capacitive sensor (58a), the first capacitive sensor (58a) is provided at a position corresponding to the first liquid level height of the water tank (30, 30a), and the controller (25) determines that the liquid level height is at the first liquid level height based on a signal from the first capacitive sensor (58a);
wherein the main body (20) comprises a support member (23) adjacent to the water tank (30, 30a), and the first capacitive sensor (58a) is provided on the support member (23).

10. The beverage machine (100) according to any one of the preceding claims, further comprising a second liquid level sensor fastened to the main body (20), wherein the second liquid level sensor is communicatively connected to the controller (25), based on a signal detected by the second liquid level sensor indicating a second liquid level height: when the water inlet (31) is in the first state, the controller (25) controls the on-off valve (411) to close; when the water inlet (31) is in the second state, the controller (25) controls the first water pump (422) to close; wherein the second liquid level height corresponds to a full water level height of the water tank (30, 30a).

11. The beverage machine (100) according to claim 10, wherein the second liquid level sensor is configured as a second capacitive sensor (58b), the second capacitive sensor (58b) is provided at a position corresponding to the second liquid level height of the water tank (30, 30a), and the controller (25) determines that the liquid level height is at the second liquid level height based on a signal from the second capacitive sensor (58b);
wherein the main body (20) comprises a support member (23) adjacent to the water tank (30, 30a), and the second capacitive sensor (58b) is provided on the support member (23).

12. The beverage machine (100) according to claim 10, wherein the second liquid level sensor is configured as a second pressure sensor (55a), the second pressure sensor (55a) is located above the second liquid level height, a pipe (36a) is provided between the water tank (30, 30a) and the second pressure sensor (55a), pressure is transmitted between the water tank (30, 30a) and the second pressure sensor (55a) through the pipe (36a), the second pressure sensor (55a) is configured to detect medium pressure in the pipe (36a) and generate a second pressure signal, the second pressure signal is used to form the liquid level height of the water tank (30, 30a); as the liquid level height is higher than the second liquid level height: when the water inlet (31) is in the first state, the controller (25) controls the on-off valve (411) to close; when the water inlet (31) is in the second state, the controller (25) controls the first water pump (422) to close.

13. The beverage machine (100) according to any one of the preceding claims, wherein the first liquid level sensor is configured as a second pressure sensor (55a), the second pressure sensor (55a) is located above a second liquid level height, the second liquid level height corresponds to a full water level height of the water tank (30, 30a), a pipe (36a) is provided between the water tank (30, 30a) and the second pressure sensor (55a), pressure is transmitted between the water tank (30, 30a) and the second pressure sensor (55a) through the pipe (36a), the second pressure sensor (55a) is configured to detect medium pressure in the pipe (36a) and generate a second pressure signal, the second pressure signal is used to form the liquid level height of the water tank (30, 30a); as the liquid level height is higher than the second liquid level height: when the water inlet (31) is in the first state, the controller (25) controls the on-off valve (411) to close; when the water inlet (31) is in the second state, the controller (25) controls the first water pump (422) to close.

14. The beverage machine (100) according to any one of the preceding claims, wherein the water tank (30, 30a) is provided with a water inlet check valve (33) and a water outlet check valve (34), the water inlet check valve (33) is configured to close or open the water inlet (31), the water outlet check valve (34) is configured to close or open the water outlet (32), the main body (20) is provided with a water inlet seat (50) and a water outlet seat (27), the water inlet seat (50) cooperates with the water inlet check valve (33) to open the water inlet (31), and the water outlet seat (27) cooperates with the water outlet check valve (34) to open the water outlet (32).

15. The beverage machine (100) according to any one of the preceding claims, wherein the main body (20) has a front portion provided with a beverage outlet (24), a rear portion opposite to the front portion, and two side portions, wherein one of the side portions has a recessed receiving cavity (201), the water tank (30, 30a) is installed vertically in the receiving cavity (201), and an outer wall of the water tank (30, 30a) is flush with the side portion of the main body (20), the water inlet (31) and the water outlet (32) are both provided at the bottom of the water tank (30);
or,
the main body (20) has a front portion provided with a beverage outlet (24), a rear portion opposite to the front portion, and two side portions, wherein the front portion has a recessed receiving cavity (201), the water tank (30, 30a) is installed horizontally in the receiving cavity (201), and an outer wall of the water tank (30, 30a) is flush with the front portion of the main body (20), the water inlet (31) and the water outlet (32) are both provided at one side of the water tank (30a).

## Patentansprüche

1. Getränkemaschine (100), aufweisend:
einen Hauptkörper (20) mit einem Hauptkörper-Wassereinlass (202);
einen Wassertank (30, 30a), der lösbar mit dem Hauptkörper (20) verbunden ist, wobei der Wassertank (30, 30a) einen Wassereinlass (31) und einen Wasserauslass (32) aufweist und der Wasserauslass (32) mit dem Hauptkörper-Wassereinlass (202) in Verbindung steht;
**dadurch gekennzeichnet, dass** der Wassereinlass (31) eingerichtet ist, selektiv auf einen geschlossenen Zustand, einen ersten Zustand oder einen zweiten Zustand eingestellt zu werden; wenn sich der Wassereinlass (31) in dem geschlossenen Zustand befindet, eine Wasserquelle des Hauptkörpers (20) aus dem Wassertank (30, 30a) kommt; wenn sich der Wassereinlass (31) in dem ersten Zustand befindet, der Wassereinlass (31) mit einer ersten Wasserversorgungsleitung (41) in Verbindung steht und die Wasserquelle des Hauptkörpers (20) aus einem Wasserverteilungsnetz (11) kommt, das mit der ersten Wasserversorgungsleitung (41) verbunden ist; wenn sich der Wassereinlass (31) in dem zweiten Zustand befindet, der Wassereinlass (31) mit einer zweiten Wasserversorgungsleitung (42) in Verbindung steht und die Wasserquelle des Hauptkörpers (20) aus einer Behälter-Wasserquelle (12) kommt, die mit der zweiten Wasserversorgungsleitung (42) verbunden ist;
wobei ein Ein-Aus-Ventil (411) an der ersten Wasserversorgungsleitung (41) vorgesehen ist und das Ein-Aus-Ventil (411) eingerichtet ist, die Verbindung oder Trennung eines Wasserdurchgangs von dem Wasserverteilungsnetz (11) zu dem Wassereinlass (31) zu steuern; eine erste Wasserpumpe (422) an der zweiten Wasserversorgungsleitung (42) vorgesehen ist und die erste Wasserpumpe (422) eingerichtet ist, den Wasserfluss von der Behälter-Wasserquelle (12) zu dem Wassereinlass (31) anzutreiben;
einen ersten Flüssigkeitspegelsensor, der eingerichtet ist, eine Flüssigkeitspegelhöhe in dem Wassertank (30, 30a) zu erfassen; und
eine Steuerung (25), wobei die Steuerung (25) kommunikativ mit dem ersten Flüssigkeitspegelsensor verbunden ist;
wenn die Flüssigkeitspegelhöhe niedriger als eine erste Flüssigkeitspegelhöhe ist: wenn sich der Wassereinlass (31) in dem ersten Zustand befindet, die Steuerung (25) das Ein-Aus-Ventil (411) steuert, um sich zu öffnen, um Wasser zu dem Wassertank (30, 30a) durch die erste Wasserversorgungsleitung (41) nachzufüllen; wenn sich der Wassereinlass (31) in dem zweiten Zustand befindet, die Steuerung (25) die erste Wasserpumpe (422) steuert, um sich zu öffnen, um Wasser zu dem Wassertank (30, 30a) durch die zweite Wasserversorgungsleitung (42) nachzufüllen; und wenn sich der Wassereinlass (31) in dem geschlossenen Zustand befindet, die Steuerung (25) ein Signal erzeugt, um einen Benutzer daran zu erinnern, Wasser in den Wassertank (30, 30a) nachzufüllen.

2. Getränkemaschine (100) nach Anspruch 1, wobei der Wassereinlass (31) und der Wasserauslass (32) auf einer gleichen Seite des Wassertanks (30, 30a) vorgesehen sind und die Anordnung des Wassereinlasses (31) und des Wasserauslasses (32) eines der folgenden Merkmale erfüllt:
der Wassereinlass (31) und der Wasserauslass (32) sind beide an dem Boden des Wassertanks (30) vorgesehen;
der Wassereinlass (31) und der Wasserauslass (32) sind beide an einer Seite des Wassertanks (30a) vorgesehen.

3. Getränkemaschine (100) nach Anspruch 1 oder 2, wobei der erste Flüssigkeitspegelsensor als ein erster Drucksensor (55) eingerichtet ist und der erste Drucksensor (55) eingerichtet ist, einen Mediendruck zu erfassen, der den Flüssigkeitspegel in dem Wassertank (30, 30a) anzeigt, und ein erstes Drucksignal zu erzeugen, wobei das erste Drucksignal verwendet wird, um die Flüssigkeitspegelhöhe des Wassertanks (30, 30a) zu bilden;
wenn die Flüssigkeitspegelhöhe höher als eine zweite Flüssigkeitspegelhöhe ist: wenn sich der Wassereinlass (31) in dem ersten Zustand befindet, die Steuerung (25) das Ein-Aus-Ventil (411) steuert, sich zu schließen; und wenn sich der Wassereinlass (31) in dem zweiten Zustand befindet, die Steuerung (25) die erste Wasserpumpe (422) steuert, sich zu schließen.

4. Getränkemaschine (100) nach Anspruch 3, wobei der Hauptkörper (20) mit einem Wassereinlasssitz (50) versehen ist, der lösbar mit dem Wassertank (30, 30a) verbunden ist, der Wassereinlasssitz (50) an dem Wassereinlass (31) vorgesehen ist, der Wassereinlasssitz (50) eine Wassereinlasskammer (501) aufweist, die erste Wasserversorgungsleitung (41) und die zweite Wasserversorgungsleitung (42) beide mit dem Wassereinlass (31) durch die Wassereinlasskammer (501) in Verbindung stehen, der erste Drucksensor (55) mit dem Wassereinlasssitz (50) verbunden ist und eingerichtet ist, das erste Drucksignal bereitzustellen, das den Druck in der Wassereinlasskammer (501) angibt, und wobei die Steuerung (25) das erste Drucksignal in die Flüssigkeitspegelhöhe in dem Wassertank (30, 30a) umwandelt.

5. Getränkemaschine (100) nach Anspruch 4, wobei der Wassereinlasssitz (50) einen Hauptteil (51) und eine Abdeckkomponente (52) aufweist, die mit dem Hauptteil (51) verbunden ist, der Wassereinlasssitz (50) ferner eine erste Membran (56) aufweist, die zwischen dem Hauptteil (51) und der Abdeckkomponente (52) vorgesehen ist; die Wassereinlasskammer (501) gemeinsam durch den Hauptteil (51) und die erste Membran (56) definiert ist, die Abdeckkomponente (52) und die erste Membran (56) gemeinsam eine Dichtungskammer (502) definieren, Druck zwischen der Wassereinlasskammer (501) und der Dichtungskammer (502) über die erste Membran (56) übertragen wird und der erste Drucksensor (55) Druck in der Dichtungskammer (502) erfasst und das erste Drucksignal erzeugt; wobei der Hauptteil (51) lösbar mit dem Wassertank (30, 30a) verbunden ist, der Hauptteil (51) mit einem Einlassdurchgang (503) versehen ist, der mit der Wassereinlasskammer (501) in Verbindung steht, die erste Wasserversorgungsleitung (41) und die zweite Wasserversorgungsleitung (42) beide mit dem Einlassdurchgang (503) in Verbindung stehen, ein Blockierabschnitt (513) in der Wassereinlasskammer (501) vorgesehen ist, der Blockierabschnitt (513) in einer Flüssigkeitseintrittsrichtung des Einlassdurchgangs (503) vorgesehen ist, und wobei eine Erstreckungsrichtung des Blockierabschnitts (513) die Flüssigkeitseintrittsrichtung des Einlassdurchgangs (503) schneidet.

6. Getränkemaschine (100) nach einem der vorhergehenden Ansprüche, wobei ein Puffersitz (60) ferner an der ersten Wasserversorgungsleitung (41) vorgesehen ist, der Puffersitz (60) stromaufwärts des Ein-Aus-Ventils (411) vorgesehen ist, der Puffersitz (60) einen Einlasskanal (601), einen Auslasskanal (602) und eine Pufferkammer (603) aufweist, die Pufferkammer (603) zwischen dem Einlasskanal (601) und dem Auslasskanal (602) vorgesehen ist, und wobei ein Teil von Kammerwänden der Pufferkammer (603) als eine zweite Membran (66) eingerichtet ist.

7. Getränkemaschine (100) nach Anspruch 6, wobei der Einlasskanal (601) ein Strömungsbegrenzungsloch (611) an einem Ende bildet, das der Pufferkammer (603) zugewandt ist, der Einlasskanal (601) eine minimale Querschnittsfläche an dem Strömungsbegrenzungsloch (611) aufweist, und eine minimale Querschnittsfläche des Auslasskanals (602) größer als eine Querschnittsfläche des Strömungsbegrenzungslochs (611) ist; wobei ein Flüssigkeitsblockierabschnitt (631) in der Pufferkammer (603) vorgesehen ist, der Flüssigkeitsblockierabschnitt (631) in einer Flüssigkeitseinströmrichtung des Einlasskanals (601) vorgesehen ist, und wobei eine Erstreckungsrichtung des Flüssigkeitsblockierabschnitts (631) eine Flüssigkeitsausströmrichtung des Auslasskanals (602) schneidet.

8. Getränkemaschine (100) nach Anspruch 3, ferner aufweisend ein Rohr (36), das sich von einem Einlass des Wassertanks (30, 30a) zu dem Boden des Wassertanks (30, 30a) erstreckt, wobei der Wassereinlass (31b) oberhalb der zweiten Flüssigkeitspegelhöhe des Wassertanks (30, 30a) vorgesehen ist, ein Einlass des Rohrs (36) mit dem Wassereinlass (31b) verbunden ist, das Rohr (36) einen ersten Abschnitt (361), der sich in den Wassertank (30, 30a) erstreckt, und einen zweiten Abschnitt (362) aufweist, der oberhalb des Wassertanks (30, 30a) angeordnet ist, und wobei der erste Drucksensor (55) mit dem zweiten Abschnitt (362) verbunden ist.

9. Getränkemaschine (100) nach einem der vorhergehenden Ansprüche, wobei der erste Flüssigkeitspegelsensor als ein erster kapazitiver Sensor (58a) eingerichtet ist, der erste kapazitive Sensor (58a) an einer Position vorgesehen ist, die der ersten Flüssigkeitspegelhöhe des Wassertanks (30, 30a) entspricht, und wobei die Steuerung (25) basierend auf einem Signal von dem ersten kapazitiven Sensor (58a) bestimmt, dass die Flüssigkeitspegelhöhe bei der ersten Flüssigkeitspegelhöhe ist;
wobei der Hauptkörper (20) ein Stützelement (23) benachbart zu dem Wassertank (30, 30a) aufweist, und wobei der erste kapazitive Sensor (58a) an dem Stützelement (23) vorgesehen ist.

10. Getränkemaschine (100) nach einem der vorhergehenden Ansprüche, ferner aufweisend einen zweiten Flüssigkeitspegelsensor, der an dem Hauptkörper (20) befestigt ist, wobei der zweite Flüssigkeitspegelsensor kommunikativ mit der Steuerung (25) verbunden ist, und basierend auf einem Signal, das von dem zweiten Flüssigkeitspegelsensor erfasst wird, das eine zweite Flüssigkeitspegelhöhe angibt: wenn sich der Wassereinlass (31) in dem ersten Zustand befindet, die Steuerung (25) das Ein-Aus-Ventil (411) steuert, sich zu schließen; und wenn sich der Wassereinlass (31) in dem zweiten Zustand befindet, die Steuerung (25) die erste Wasserpumpe (422) steuert, sich zu schließen; wobei die zweite Flüssigkeitspegelhöhe einer vollen Wasserpegelhöhe des Wassertanks (30, 30a) entspricht.

11. Getränkemaschine (100) nach Anspruch 10, wobei der zweite Flüssigkeitspegelsensor als ein zweiter kapazitiver Sensor (58b) eingerichtet ist, der zweite kapazitive Sensor (58b) an einer Position vorgesehen ist, die der zweiten Flüssigkeitspegelhöhe des Wassertanks (30, 30a) entspricht, und wobei die Steuerung (25) basierend auf einem Signal von dem zweiten kapazitiven Sensor (58b) bestimmt, dass die Flüssigkeitspegelhöhe bei der zweiten Flüssigkeitspegelhöhe ist;
wobei der Hauptkörper (20) ein Stützelement (23) benachbart zu dem Wassertank (30, 30a) aufweist, und wobei der zweite kapazitive Sensor (58b) an dem Stützelement (23) vorgesehen ist.

12. Getränkemaschine (100) nach Anspruch 10, wobei der zweite Flüssigkeitspegelsensor als ein zweiter Drucksensor (55a) eingerichtet ist, der zweite Drucksensor (55a) oberhalb der zweiten Flüssigkeitspegelhöhe angeordnet ist, ein Rohr (36a) zwischen dem Wassertank (30, 30a) und dem zweiten Drucksensor (55a) vorgesehen ist, Druck zwischen dem Wassertank (30, 30a) und dem zweiten Drucksensor (55a) durch das Rohr (36a) übertragen wird, und der zweite Drucksensor (55a) eingerichtet ist, einen Mediendruck in dem Rohr (36a) zu erfassen und ein zweites Drucksignal zu erzeugen, wobei das zweite Drucksignal verwendet wird, um die Flüssigkeitspegelhöhe des Wassertanks (30, 30a) zu bilden; wenn die Flüssigkeitspegelhöhe höher als die zweite Flüssigkeitspegelhöhe ist: wenn sich der Wassereinlass (31) in dem ersten Zustand befindet, die Steuerung (25) das Ein-Aus-Ventil (411) steuert, sich zu schließen; und wenn sich der Wassereinlass (31) in dem zweiten Zustand befindet, die Steuerung (25) die erste Wasserpumpe (422) steuert, sich zu schließen.

13. Getränkemaschine (100) nach einem der vorhergehenden Ansprüche, wobei der erste Flüssigkeitspegelsensor als ein zweiter Drucksensor (55a) eingerichtet ist, der zweite Drucksensor (55a) oberhalb einer zweiten Flüssigkeitspegelhöhe angeordnet ist, die zweite Flüssigkeitspegelhöhe einer vollen Wasserpegelhöhe des Wassertanks (30, 30a) entspricht, ein Rohr (36a) zwischen dem Wassertank (30, 30a) und dem zweiten Drucksensor (55a) vorgesehen ist, Druck zwischen dem Wassertank (30, 30a) und dem zweiten Drucksensor (55a) durch das Rohr (36a) übertragen wird, und der zweite Drucksensor (55a) eingerichtet ist, einen Mediendruck in dem Rohr (36a) zu erfassen und ein zweites Drucksignal zu erzeugen, wobei das zweite Drucksignal verwendet wird, um die Flüssigkeitspegelhöhe des Wassertanks (30, 30a) zu bilden; wenn die Flüssigkeitspegelhöhe höher als die zweite Flüssigkeitspegelhöhe ist: wenn sich der Wassereinlass (31) in dem ersten Zustand befindet, die Steuerung (25) das Ein-Aus-Ventil (411) steuert, sich zu schließen; und wenn sich der Wassereinlass (31) in dem zweiten Zustand befindet, die Steuerung (25) die erste Wasserpumpe (422) steuert, sich zu schließen.

14. Getränkemaschine (100) nach einem der vorhergehenden Ansprüche, wobei der Wassertank (30, 30a) mit einem Wassereinlass-Rückschlagventil (33) und einem Wasserauslass-Rückschlagventil (34) versehen ist, das Wassereinlass-Rückschlagventil (33) eingerichtet ist, den Wassereinlass (31) zu schließen oder zu öffnen, das Wasserauslass-Rückschlagventil (34) eingerichtet ist, den Wasserauslass (32) zu schließen oder zu öffnen, der Hauptkörper (20) mit einem Wassereinlasssitz (50) und einem Wasserauslasssitz (27) versehen ist, der Wassereinlasssitz (50) mit dem Wassereinlass-Rückschlagventil (33) zusammenwirkt, um den Wassereinlass (31) zu öffnen, und der Wasserauslasssitz (27) mit dem Wasserauslass-Rückschlagventil (34) zusammenwirkt, um den Wasserauslass (32) zu öffnen.

15. Getränkemaschine (100) nach einem der vorhergehenden Ansprüche, wobei der Hauptkörper (20) einen vorderen Abschnitt, der mit einem Getränkeauslass (24) versehen ist, einen hinteren Abschnitt gegenüber dem vorderen Abschnitt und zwei Seitenabschnitte aufweist, wobei einer der Seitenabschnitte einen vertieften Aufnahmehohlraum (201) aufweist, der Wassertank (30, 30a) vertikal in dem Aufnahmehohlraum (201) angebracht ist, und eine Außenwand des Wassertanks (30, 30a) mit dem Seitenabschnitt des Hauptkörpers (20) bündig ist, und wobei der Wassereinlass (31) sowie der Wasserauslass (32) beide an dem Boden des Wassertanks (30) vorgesehen sind;
oder,
der Hauptkörper (20) einen vorderen Abschnitt, der mit einem Getränkeauslass (24) versehen ist, einen hinteren Abschnitt gegenüber dem vorderen Abschnitt, und zwei Seitenabschnitte aufweist, wobei der vordere Abschnitt einen vertieften Aufnahmehohlraum (201) aufweist, der Wassertank (30, 30a) horizontal in dem Aufnahmehohlraum (201) angebracht ist, und eine Außenwand des Wassertanks (30, 30a) mit dem vorderen Abschnitt des Hauptkörpers (20) bündig ist, und wobei der Wassereinlass (31) sowie der Wasserauslass (32) beide an einer Seite des Wassertanks (30a) vorgesehen sind.

## Revendications

1. Machine à boissons (100), comprenant :
un corps principal (20) présentant une entrée d'eau de corps principal (202) ;
un réservoir d'eau (30, 30a) relié de manière détachable au corps principal (20), dans laquelle le réservoir d'eau (30, 30a) présente une entrée d'eau (31) et une sortie d'eau (32), et la sortie d'eau (32) est en communication avec l'entrée d'eau de corps principal (202) ;
**caractérisée en ce que** l'entrée d'eau (31) est configurée pour être sélectivement réglée sur l'un quelconque d'un état fermé, d'un premier état ou d'un second état ; lorsque l'entrée d'eau (31) est dans l'état fermé, une source d'eau du corps principal (20) provient du réservoir d'eau (30, 30a) ; lorsque l'entrée d'eau (31) est dans le premier état, l'entrée d'eau (31) est en communication avec une première conduite d'alimentation en eau (41), et la source d'eau du corps principal (20) provient d'un réseau de distribution d'eau (11) relié à la première conduite d'alimentation en eau (41) ; lorsque l'entrée d'eau (31) est dans le second état, l'entrée d'eau (31) est en communication avec une seconde conduite d'alimentation en eau (42), et la source d'eau du corps principal (20) provient d'une source d'eau en bonbonne (12) reliée à la seconde conduite d'alimentation en eau (42) ;
dans laquelle une vanne marche/arrêt (411) est prévue sur la première conduite d'alimentation en eau (41), et la vanne marche/arrêt (411) est configurée pour commander la connexion ou la déconnexion d'un passage d'eau du réseau de distribution d'eau (11) à l'entrée d'eau (31) ; une première pompe à eau (422) est prévue sur la seconde conduite d'alimentation en eau (42), et la première pompe à eau (422) est configurée pour entraîner le débit d'eau de la source d'eau en bonbonne (12) à l'entrée d'eau (31) ;
un premier capteur de niveau de liquide configuré pour détecter une hauteur de niveau de liquide dans le réservoir d'eau (30, 30a) ; et
un dispositif de commande (25), dans laquelle le dispositif de commande (25) est relié de manière communicative au premier capteur de niveau de liquide ;
lorsque la hauteur de niveau de liquide est inférieure à une première hauteur de niveau de liquide : lorsque l'entrée d'eau (31) est dans le premier état, le dispositif de commande (25) commande l'ouverture de la vanne marche/arrêt (411) pour remplir d'eau le réservoir d'eau (30, 30a) par le biais de la première conduite d'alimentation en eau (41) ; lorsque l'entrée d'eau (31) est dans le second état, le dispositif de commande (25) commande l'ouverture de la première pompe à eau (422) pour remplir d'eau le réservoir d'eau (30, 30a) par le biais de la seconde conduite d'alimentation en eau (42) ; lorsque l'entrée d'eau (31) est dans l'état fermé, le dispositif de commande (25) génère un signal pour rappeler à un utilisateur de remplir d'eau le réservoir d'eau (30, 30a).

2. Machine à boissons (100) selon la revendication 1, dans laquelle l'entrée d'eau (31) et la sortie d'eau (32) sont prévues du même côté du réservoir d'eau (30, 30a), et l'agencement de l'entrée d'eau (31) et de la sortie d'eau (32) satisfait à l'une des caractéristiques suivantes :
l'entrée d'eau (31) et la sortie d'eau (32) sont toutes deux prévues au fond du réservoir d'eau (30) ;
l'entrée d'eau (31) et la sortie d'eau (32) sont toutes deux prévues d'un côté du réservoir d'eau (30a).

3. Machine à boissons (100) selon la revendication 1 ou 2, dans laquelle le premier capteur de niveau de liquide est configuré comme un premier capteur de pression (55), et le premier capteur de pression (55) est configuré pour détecter la pression moyenne indiquant le niveau de liquide dans le réservoir d'eau (30, 30a) et générer un premier signal de pression, dans laquelle le premier signal de pression est utilisé pour former la hauteur de niveau de liquide du réservoir d'eau (30, 30a) ;
lorsque la hauteur de niveau de liquide est supérieure à une seconde hauteur de niveau de liquide : lorsque l'entrée d'eau (31) est dans le premier état, le dispositif de commande (25) commande la fermeture de la vanne marche/arrêt (411) ; lorsque l'entrée d'eau (31) est dans le second état, le dispositif de commande (25) commande la fermeture de la première pompe à eau (422).

4. Machine à boissons (100) selon la revendication 3, dans laquelle le corps principal (20) est pourvu d'un siège d'entrée d'eau (50) relié de manière détachable au réservoir d'eau (30, 30a), le siège d'entrée d'eau (50) est prévu au niveau de l'entrée d'eau (31), le siège d'entrée d'eau (50) comprend une chambre d'entrée d'eau (501), la première conduite d'alimentation en eau (41) et la seconde conduite d'alimentation en eau (42) sont toutes deux en communication avec l'entrée d'eau (31) à travers la chambre d'entrée d'eau (501), le premier capteur de pression (55) est relié au siège d'entrée d'eau (50) et configuré pour fournir le premier signal de pression indiquant la pression dans la chambre d'entrée d'eau (501), et le dispositif de commande (25) convertit le premier signal de pression en hauteur de niveau de liquide dans le réservoir d'eau (30, 30a).

5. Machine à boissons (100) selon la revendication 4, dans laquelle le siège d'entrée d'eau (50) comprend une partie principale (51) et un composant de couvercle (52) relié à la partie principale (51), le siège d'entrée d'eau (50) comprend en outre une première membrane (56) prévue entre la partie principale (51) et le composant de couvercle (52) ; la chambre d'entrée d'eau (501) est définie conjointement par la partie principale (51) et la première membrane (56), le composant de couvercle (52) et la première membrane (56) définissent conjointement une chambre d'étanchéité (502), la pression est transmise entre la chambre d'entrée d'eau (501) et la chambre d'étanchéité (502) via la première membrane (56), et le premier capteur de pression (55) détecte la pression dans la chambre d'étanchéité (502) et génère le premier signal de pression ; dans laquelle la partie principale (51) est reliée de manière détachable au réservoir d'eau (30, 30a), la partie principale (51) est pourvue d'un passage d'entrée (503) communiquant avec la chambre d'entrée d'eau (501), la première conduite d'alimentation en eau (41) et la seconde conduite d'alimentation en eau (42) communiquent toutes deux avec le passage d'entrée (503), une portion de blocage (513) est prévue dans la chambre d'entrée d'eau (501), la portion de blocage (513) est prévue dans une direction d'entrée de liquide du passage d'entrée (503), et une direction d'extension de la portion de blocage (513) croise la direction d'entrée de liquide du passage d'entrée (503).

6. Machine à boissons (100) selon l'une quelconque des revendications précédentes, dans laquelle un siège d'amortissement (60) est en outre prévu sur la première conduite d'alimentation en eau (41), le siège d'amortissement (60) est prévu en amont de la vanne marche/arrêt (411), le siège d'amortissement (60) présente un canal d'entrée (601), un canal de sortie (602) et une chambre d'amortissement (603), la chambre d'amortissement (603) est prévue entre le canal d'entrée (601) et le canal de sortie (602), et une partie des parois de chambre de la chambre d'amortissement (603) est configurée comme une seconde membrane (66).

7. Machine à boissons (100) selon la revendication 6, dans laquelle le canal d'entrée (601) forme un orifice de restriction de débit (611) au niveau d'une extrémité faisant face à la chambre d'amortissement (603), le canal d'entrée (601) présente une aire de section transversale minimale au niveau de l'orifice de restriction de débit (611), et une aire de section transversale minimale du canal de sortie (602) est supérieure à une aire de section transversale de l'orifice de restriction de débit (611) ; dans laquelle une portion de blocage de liquide (631) est prévue dans la chambre d'amortissement (603), la portion de blocage de liquide (631) est prévue dans une direction d'entrée de liquide du canal d'entrée (601), et une direction d'extension de la portion de blocage de liquide (631) croise une direction de sortie de liquide du canal de sortie (602).

8. Machine à boissons (100) selon la revendication 3, comprenant en outre un tuyau (36) s'étendant d'une entrée du réservoir d'eau (30, 30a) jusqu'au fond du réservoir d'eau (30, 30a), dans laquelle l'entrée d'eau (31b) est prévue au-dessus de la seconde hauteur de niveau de liquide du réservoir d'eau (30, 30a), une entrée du tuyau (36) est reliée à l'entrée d'eau (31b), le tuyau (36) comprend une première section (361) s'étendant dans le réservoir d'eau (30, 30a) et une seconde section (362) située au-dessus du réservoir d'eau (30, 30a), et le premier capteur de pression (55) est relié à la seconde section (362).

9. Machine à boissons (100) selon l'une quelconque des revendications précédentes, dans laquelle le premier capteur de niveau de liquide est configuré comme un premier capteur capacitif (58a), le premier capteur capacitif (58a) est prévu au niveau d'une position correspondant à la première hauteur de niveau de liquide du réservoir d'eau (30, 30a), et le dispositif de commande (25) détermine que la hauteur de niveau de liquide est à la première hauteur de niveau de liquide sur la base d'un signal provenant du premier capteur capacitif (58a) ;
dans laquelle le corps principal (20) comprend un élément de support (23) adjacent au réservoir d'eau (30, 30a), et le premier capteur capacitif (58a) est prévu sur l'élément de support (23).

10. Machine à boissons (100) selon l'une quelconque des revendications précédentes, comprenant en outre un second capteur de niveau de liquide fixé au corps principal (20), dans laquelle le second capteur de niveau de liquide est relié de manière communicative au dispositif de commande (25), sur la base d'un signal détecté par le second capteur de niveau de liquide indiquant une seconde hauteur de niveau de liquide : lorsque l'entrée d'eau (31) est dans le premier état, le dispositif de commande (25) commande la fermeture de la vanne marche/arrêt (411) ; lorsque l'entrée d'eau (31) est dans le second état, le dispositif de commande (25) commande l'arrêt de la première pompe à eau (422) ; dans laquelle la seconde hauteur de niveau de liquide correspond à une hauteur de niveau d'eau maximale du réservoir d'eau (30, 30a).

11. Machine à boissons (100) selon la revendication 10, dans laquelle le second capteur de niveau de liquide est configuré comme un second capteur capacitif (58b), le second capteur capacitif (58b) est prévu au niveau d'une position correspondant à la seconde hauteur de niveau de liquide du réservoir d'eau (30, 30a), et le dispositif de commande (25) détermine que la hauteur de niveau de liquide est à la seconde hauteur de niveau de liquide sur la base d'un signal provenant du second capteur capacitif (58b) ;
dans laquelle le corps principal (20) comprend un élément de support (23) adjacent au réservoir d'eau (30, 30a), et le second capteur capacitif (58b) est prévu sur l'élément de support (23).

12. Machine à boissons (100) selon la revendication 10, dans laquelle le second capteur de niveau de liquide est configuré comme un second capteur de pression (55a), le second capteur de pression (55a) est situé au-dessus de la seconde hauteur de niveau de liquide, un tuyau (36a) est prévu entre le réservoir d'eau (30, 30a) et le second capteur de pression (55a), la pression est transmise entre le réservoir d'eau (30, 30a) et le second capteur de pression (55a) par l'intermédiaire du tuyau (36a), le second capteur de pression (55a) est configuré pour détecter la pression du milieu dans le tuyau (36a) et générer un second signal de pression, le second signal de pression est utilisé pour former la hauteur de niveau de liquide du réservoir d'eau (30, 30a) ; lorsque la hauteur de niveau de liquide est supérieure à la seconde hauteur de niveau de liquide : lorsque l'entrée d'eau (31) est dans le premier état, le dispositif de commande (25) commande la fermeture de la vanne marche/arrêt (411) ; lorsque l'entrée d'eau (31) est dans le second état, le dispositif de commande (25) commande la fermeture de la première pompe à eau (422).

13. Machine à boissons (100) selon l'une quelconque des revendications précédentes, dans laquelle le premier capteur de niveau de liquide est configuré comme un second capteur de pression (55a), le second capteur de pression (55a) est situé au-dessus d'une seconde hauteur de niveau de liquide, la seconde hauteur de niveau de liquide correspond à une hauteur de niveau d'eau maximale du réservoir d'eau (30, 30a), un tuyau (36a) est prévu entre le réservoir d'eau (30, 30a) et le second capteur de pression (55a), la pression est transmise entre le réservoir d'eau (30, 30a) et le second capteur de pression (55a) par l'intermédiaire du tuyau (36a), le second capteur de pression (55a) est configuré pour détecter la pression du milieu dans le tuyau (36a) et générer un second signal de pression, le second signal de pression est utilisé pour former la hauteur de niveau de liquide du réservoir d'eau (30, 30a) ; lorsque la hauteur de niveau de liquide est supérieure à la seconde hauteur de niveau de liquide : lorsque l'entrée d'eau (31) est dans le premier état, le dispositif de commande (25) commande la fermeture de la vanne marche/arrêt (411) ; lorsque l'entrée d'eau (31) est dans le second état, le dispositif de commande (25) commande la fermeture de la première pompe à eau (422).

14. Machine à boissons (100) selon l'une quelconque des revendications précédentes, dans laquelle le réservoir d'eau (30, 30a) est pourvu d'un clapet anti-retour d'entrée d'eau (33) et d'un clapet anti-retour de sortie d'eau (34), le clapet anti-retour d'entrée d'eau (33) est configuré pour fermer ou ouvrir l'entrée d'eau (31), le clapet anti-retour de sortie d'eau (34) est configuré pour fermer ou ouvrir la sortie d'eau (32), le corps principal (20) est pourvu d'un siège d'entrée d'eau (50) et d'un siège de sortie d'eau (27), le siège d'entrée d'eau (50) coopère avec le clapet anti-retour d'entrée d'eau (33) pour ouvrir l'entrée d'eau (31), et le siège de sortie d'eau (27) coopère avec le clapet anti-retour de sortie d'eau (34) pour ouvrir la sortie d'eau (32).

15. Machine à boissons (100) selon l'une quelconque des revendications précédentes, dans laquelle le corps principal (20) présente une portion avant pourvue d'une sortie de boisson (24), une portion arrière opposée à la portion avant, et deux portions latérales, dans laquelle l'une des portions latérales présente une cavité de réception encastrée (201), le réservoir d'eau (30, 30a) est installé verticalement dans la cavité de réception (201), et une paroi extérieure du réservoir d'eau (30, 30a) est alignée avec la portion latérale du corps principal (20), l'entrée d'eau (31) et la sortie d'eau (32) sont toutes deux prévues au fond du réservoir d'eau (30) ;
ou,
le corps principal (20) présente une portion avant pourvue d'une sortie de boisson (24), une portion arrière opposée à la portion avant, et deux portions latérales, dans laquelle la portion avant présente une cavité de réception encastrée (201), le réservoir d'eau (30, 30a) est installé horizontalement dans la cavité de réception (201), et une paroi extérieure du réservoir d'eau (30, 30a) est alignée avec la portion avant du corps principal (20), l'entrée d'eau (31) et la sortie d'eau (32) sont toutes deux prévues d'un côté du réservoir d'eau (30a).
